# EUROPÄISCHE PATENTSCHRIFT

(11) **EP 4 054 033 B1**
(45) Veröffentlichungstag und Bekanntmachung des Hinweises auf die Patenterteilung: **17.09.2025**
(21) Anmeldenummer: 22168861.7
(22) Anmeldetag: 08.03.2019
(51) Int. Cl.: H02G 3/08

(54) **INSTALLATIONSDOSE**
INSTALLATION BOX
BOÎTE D'INSTALLATION

(30) Priorität: 14.03.2018 DE 102018105944
(43) Veröffentlichungstag der Anmeldung: 07.09.2022
(62) Teilanmeldung aus: 19161649.9
(73) Patentinhaber: Kaiser GmbH & Co. KG, 58579 Schalksmühle (DE)
(72) Erfinder: Viola, Marc, 58339 Breckerfeld (DE); Rüther, Andreas, 58511 Lüdenscheid (DE)
(74) Vertreter: Rentsch Partner AG

(56) Entgegenhaltungen:
- EP-A1- 1 489 713
- EP-A1- 2 940 815
- EP-A2- 2 360 800
- DE-C- 611 474
- DE-U- 1 822 154
- FR-A1- 2 881 288
- FR-A1- 3 011 139
- US-A- 6 025 557
- US-A1- 2006 042 813
- ANNONYMOUS: "NOUVEAU BOÎTES D'ENCASTREMENT ÉTANCHES À L'AIR POUR CLOISONS CREUSES", 20 October 2017 (2017-10-20), XP055696198, Retrieved from the Internet <URL:https://www.bticino.be/sites/default/files/brochures/brochure_luchtdichte_inbouwdozen_holle_wanden_FR_v2.pdf> [retrieved on 20200518]
- ANONYMOUS: "Catalogue Bâtiment Habitat et tertiaire", BLM, 1 January 2017 (2017-01-01), pages 1 - 48, XP055756970, Retrieved from the Internet <URL:https://www.blmd.fr> [retrieved on 20201207]

## Beschreibung

### TECHNISCHES GEBIET

Die Erfindung betrifft eine Installationsdose für elektrotechnische Zwecke, insbesondere zur Aufnahme von elektrischen Teilen wie Schaltern, Steckdosen, Lampen oder ähnliches.

### HINTERGRUND DER ERFINDUNG

Um elektrische Schalter, Steckdosen, Lampen, Apparate, etc. an den dazu vorgesehenen Stellen in einem Gebäude eines Bauwerkes anbringen zu können, werden unter anderem Installationsdosen verwendet. Unter solchen Installationsdosen werden beispielsweise Unterputzdosen, Einlasskästen, Unterputzabzweigdosen, Verteilerdosen und dergleichen verstanden. Die Installationsdosen weisen typischerweise einen zylinder- oder quaderförmigen Dosenkörper mit einem Dosenboden und einer daran anschliessenden Dosenwand auf und umfassen einen über eine Installationsöffnung zugänglichen Installationsraum. Umfangsseitig in der Dosenwand und/oder dem Dosenboden, bzw. in einem Übergangsbereich zwischen Dosenboden und Dosenwand weist der Dosenkörper zudem mehrere Rohreinführungen auf, die eine Öffnung (Rohröffnung) zum Einführen eines Elektrorohres umfassen. Bei den hier zur Diskussion stehenden Installationsdosen sind die Rohröffnungen im Auslieferungszustand mit einer Membran aus weichelastischem Material überspannt, welche die Rohröffnung dichtend verschliesst. Während der Installation werden eine oder mehrere Membranen geöffnet, bzw. mit einem Werkzeug durchstossen, um ein Elektrorohr in den Installationsraum einzuführen.

Nachfolgend werden einige Dokumente aus dem Stand der Technik, welche solche Dosen zeigen, kurz erläutert:
US5125527A**,** publiziert am 30.06.1992 von Legrand SA, betrifft eine Gerätebox, für den Einbau in eine Wand, welche zumindest einen Zugang mit einem provisorischen Ausstosselement umfasst. Das Ausstosselement ist durch eine Linie von reduzierter Stärke begrenzt. Ein Zugelement ist an der Anwendung befestigt um eine Zugkraft aufzubringen.
US4961511**,** publiziert am 09.10.1991 von Kerlund und Rausing AB, offenbart einen Verschluss welcher durch Spritzguss hergestellt ist und eine Öffnungsvorrichtung mit einem Reissstreifen und einem Abziehring umfasst. Der Reissstreifen formt und definiert eine konkave Region.
EP1842271**,** publiziert am 10.10.2007 von Legrand SNC, betrifft ein Wandelement für eine dichte Kabeldurchführung, das insbesondere als Wandelement eines dichten Schaltgehäuses oder eines Rohrs verwendbar ist. Das Wandelement enthält eine steife Abdeckung in die eine Öffnung gebohrt ist und eine elastische Abdeckung. Die elastische Abdeckung enthält weiter eine innere Zone umrandet von einer ringförmigen Zerbrechlichkeitslinie und versehen mit einem Greiforgan. Das Greiforgan ermöglicht es, die Abdeckung entlang der Zerbrechlichkeitslinie abzulösen. Das Greiforgan wird von einer Zunge geformt, welche fest mit einem an der inneren Zone der elastischen Abdeckung haftenden steifen Ring verbunden ist.
FR3011139**,** publiziert am 27.03.2015 von Legrand SNC, offenbart eine Installationsbox, welche an einem Dosenboden und einer Dosenwand flexible Membranen zum Einführen von elektrischen Leitungen aufweist. Die Membranen weisen ferner je eine Öffnungshilfe auf, welches dazu dient einen Teil der Membran zu entfernen.
EP2940815**,** publiziert am 04.11.2015 von Legrand SNC, betrifft eine Elektrobox zur Montage in einer Wand, die eine Seitenwand und einen Boden aufweist, mit mindestens einer Durchgangsöffnung für elektrische Leiter. Die Durchgangsöffnungen sind mit Abdeckungen verschlossen und weisen eine Umfangsdichtung auf, welche an eine Aussenfläche der Seitenwand angespritzt ist.
DE202012005863**,** publiziert am 30.08.2012 von desselben Anmelderin wie die vorliegende Anmeldung, offenbart eine Installationsdose aus Kunststoff für elektrotechnische Installationen. Die Installationsdose weist einen Dosenkörper mit einem Boden und eine davon abragende, umlaufende Wandung mit mehreren Öffnungen auf. Auf die Wandung und/oder den Boden ist eine elastomere Kunststoffschicht aufgebracht, die sämtliche Öffnungen luftdicht verschließt und die mittels eines Werkzeuges, eines Kabels oder eines Anschlussmittels in deren Bereich durchstoßbar ist.
US 6 025 557 A offenbart eine einschiebbare Platte mit einer Reihe von Perforationen auf, die eine Vielzahl von nicht konzentrischen Kreisen und radiale Linien definieren.

Installationsdosen des Standes der Technik haben oft den Nachteil, dass die Membranen keinen Öffnungsmechanismus aufweisen, bzw. oftmals schwer zu öffnen sind. Weiterhin neigen die aus dem Stand der Technik bekannten Membranen dazu, nach dem Öffnen beim Durchstecken des Elektrorohres unkontrolliert einzureissen, was zu undichten Installationen führt. Dies ist insbesondere aus energetischen Gründen unerwünscht, da über die Rohre Zugluft austreten kann.

### DARSTELLUNG DER ERFINDUNG

Eine Aufgabe der Erfindung besteht darin eine verbesserte Installationsdose für den Trockenbau mit einer dichten und einfach zu handhabenden Rohreinführung bereitzustellen.

Insbesondere im Trockenbau, sind Eigenschaften bei Rohreinführungen von Installationsdosen erwünscht, welche neben einer einfachen Handhabung, der verlässlichen Halterung von angeschlossenen Elektrorohren bzw. Kabelschutzschläuchen, auch eine gute Abdichtung des Installationsraumes der Installationsdose umfassen.

Wie bereits einführend erwähnt, sind aus dem Stand der Technik Installationsdosen bekannt, welche Rohreinführungen mit einer Membran umfassen. Diese Installationsdosen bestehen in der Regel aus zwei unterschiedlichen Materialkomponenten, nämlich einem Dosenkörper aus hartem Kunststoff mit einer oder mehreren Rohröffnungen, zum Einführen von Kabelschläuchen, etc. in den Installationsraum durch die Dosenwand und/oder den Dosenboden, bzw. den Übergangsbereich zwischen Dosenwand und Dosenboden. Die Rohröffnungen sind in der Regel grösser als der Durchmesser der Kabelschläuche und sind mit einer Membran aus einem anderen, weichelastischen Material überspannt. Diese Membranen sind dafür vorgesehen, dass sie mit einem Werkzeug durchstossen, bzw. geöffnet werden können um ein Elektrorohr hindurchzustecken, so dass die Membran danach dichtend an dem Elektrorohr anliegt.

Eine Installationsdose gemäss der Erfindung umfasst einen Dosenkörper aus einem harten Kunststoff, welcher einen Installationsraum zur Aufnahme von elektrischen Teilen wie Schaltern, Steckdosen, Lampen oder ähnliches umfasst. Der Dosenkörper weist einen Dosenboden und eine daran anschliessende Dosenwand auf, sowie eine dem Dosenboden gegenüberliegende Installationsöffnung, welche den Zugang zum Installationsraum des Dosenkörpers gewährleistet. In bestimmten Ausführungsformen kann der Dosenkörper weiter einen abgerundeten und/oder abgeflachten Übergangsbereich aufweisen, welcher zwischen dem Dosenboden und der Dosenwand angeordnet ist. Der Dosenkörper weist weiterhin mindestens eine Rohröffnung zum Einführen eines Elektrorohres oder Kabelschlauches in den Installationsraum auf. Diese ist im geschlossenen Zustand von einer erfindungsgemässen Membran aus elastischem Material überspannt.

Die Membran weist eine (radial) innere und eine zu dieser radial aussen orientierte äusseren Zone auf, welche die innere Zone zumindest bereichsweise umgibt. Die innere Zone ist zum Entfernen durch mechanisches Einwirken vorgesehen. Die äussere Zone ist in der Regel grösser ausgestaltet als der maximale Durchmesser des durchzusteckenden Rohres, bzw. Schlauches, sodass eine gewisse Richtungsflexibilität bezüglich der Ausrichtung des durchzusteckenden Rohres erreicht wird. Die Membran ist mit Vorteil an einem Rand der Rohröffnung umlaufend durch Mehrkomponenten-Spritzgiessen befestigt. Durch das Heraustrennen der inneren Zone der Membran aus der äusseren Zone entsteht eine flexible, dehnbare Einführungsöffnung zum Einführung von Elektrorohren oder Kabelschutzschläuchen mit unterschiedlichen Durchmessern in die Installationsdose. Die Einführungsöffnung kann sich flexibel an unterschiedliche Rohrdurchmesser anpassen. Sie ist infolge der sie umgebenden äusseren Zone bei Bedarf richtungsflexibel, d.h. es können Rohre, welche aus unterschiedlichen Richtung eintreffen, eingeführt werden. Weiterhin kann sie bei Bedarf auch einen seitlichen Versatz kompensieren.

Für das einfache Heraustrennen der inneren Zone ist zumindest bereichsweise eine entlang eines äusseren Randes der inneren Zone, zwischen der inneren und der äusseren Zone, umlaufende Dünnstelle vorgesehen. Die umlaufende Dünnstelle kann beispielsweise als eine Kerbe, bzw. Vertiefung mit einer V- oder U-Form, bzw. als eine materialtechnische Schwächung, welche z.B. durch Parameter des Herstellungsprozesses beeinflusst wird, ausgestaltet sein. Die Membran im Bereich der Dünnstelle kann eine konstante und/oder eine variable Dicke in Umfangsrichtung aufweisen. Weiterhin kann die Dünnstelle und/oder ein an sie angrenzender Bereich so ausgestaltet sein, dass beim Heraustrennen an einer oder mehreren Stellen eine Konzentration der anliegenden Kräfte auftritt, welche das Anreissen der Membran unterstützen. Dies kann z.B. durch eine oder mehrere zusätzliche Kerben, oder andere Elemente, welche zur Stresskonzentration dienen, erreicht werden.

Um nach dem Öffnen ein ungewolltes Einreissen der äusseren Zone beim Einführen eines Elektrorohres zu vermeiden, umfasst die äussere Zone mindestens eine um die innere Zone umlaufende Wulst, respektive eine lokale Verdickung. Diese Wulst kann direkt entlang der Dünnstelle oder in einem gewissen Abstand dazu angeordnet sein, um eine Dichtlippe auszubilden, welche gegenüber dem Elektrorohr abdichtet. Weiterhin kann die äussere Zone der Membran unterschiedliche Materialdicken aufweisen.

Eine erfindungsgemässe Membran weist mit Vorteil auf der Dosenaussenseite eine an der inneren Zone angeformte, nach aussen vorstehende Abreisslasche auf, welche zum Heraustrennen der inneren Zone dient. Während die Abreisslasche auf der Dosenaussenseite angebracht ist, ist die Dünnstelle der Membran bevorzugterweise auf einer Innenseite der Membran angeordnet. Dies hat den Vorteil, dass die Dimensionierung der Dünnstelle losgelöst von der auf der Aussenseite angeformten Abreisslasche vorgenommen werden kann und damit deutlich einfacher einstellbar ist. Mindestens eine umlaufende Wulst ist auf der Membranaussenseite und/oder auf der Membraninnenseite angeordnet. Weiterhin kann die innere Zone der Membran innen und/oder aussen angeordnete Versteifungsrippen aufweisen, welche bei Bedarf mit der Abreisslasche gekoppelt sind und die zum Heraustrennen der inneren Zone über die Abreisslasche eingeleiteten Kräfte so verteilen, dass die innere Zone wie vorgesehen herausgetrennt werden kann.

Indem die Dünnstelle auf der Innenseite der Dose (innen) angeordnet ist, kann diese einfach in Entformungsrichtung der Doseninnenseite angeordnet werden, während die Abreisslasche auf der Aussenseite (aussen) eine andere Richtung aufweisen kann. Nachteilige Hinterschnitte, welche zudem schwierig oder gar nicht zu entformen sind, können dadurch vermieden werden.

Die Abreisslasche ist mit Vorteil an die innere Zone angeformt und besteht aus dem gleichen weichelastischen Material wie die Membran. Dies bewirkt neben einer vereinfachten Fertigung eine vorteilhafte Krafteinleitung auf die Membran. Um der Lasche eine grössere Stabilität als der Membran zu verleihen, kann diese mit einer grösseren Stärke, respektive Dicke, als die Membran dimensioniert werden. In einer Ausführungsform kann die Abreisslasche weiterhin ein spezielles Greifforgan umfassen, welches es einem Anwender erleichtert die Abreisslasche richtig zu greifen um die innere Zone aus der äusseren Zone herauszutrennen. Das Greiforgan kann beispielsweise eine Öse sein, oder Elemente, wie angeformte Lamellen, Gitterstrukturen oder ähnliches, welche die Griffigkeit verbessern. Je nach Anwendungsgebiet kann jedoch insbesondere die innere Zone der Membran, bzw. die Abreisslasche zumindest bereichsweise aus der gleichen Materialkomponente wie der Dosenkörper bestehen.

Je nach Anwendungsgebiet und Ausgestaltung kann die umlaufende Dünnstelle über den Umfang der inneren Zone eine unterschiedliche Tiefe aufweisen. Bevorzugterweise, ist hierbei eine tiefste Stelle der umlaufenden Dünnstelle gleichzeitig als Einreissstelle vorgesehen, an der sich die innere Zone als erstes von der äusseren Zone löst. Die Einreissstelle ist hierbei mit Vorteil von einem Befestigungspunkt der Abreisslasche an der Membran aus in eine bevorzugte Abreissrichtung orientiert.

Eine solche bevorzugte Abreissrichtung wird dem Nutzer aus ergonomischen Gründen durch die Ausgestaltung der Abreisslasche nahelegt.

Je nach Ausführung kann es zudem sinnvoll sein, dass die äussere und/oder die innere Zone zumindest eine Versteifungsrippe ausweist. Bei der äusseren Zone unterstützt dies den Effekt, dass ein Einreissen möglichst vermieden wird und verstärkt zusätzlich die Halterung des einzuführenden Elektrorohres. Bei der inneren Zone kann die mindestens eine Versteifungsrippe ein einfacheres Heraustrennen der inneren Zone bewirken. Die Versteifungsrippe kann an die Membran angeformt sein und aus dem gleichen Material bestehen. Weiter kann die Versteifungsrippe an die Membran innen und/oder aussen angeordnete sein und bei Bedarf mit der Abreisslasche oder der Wulst gekoppelt sein. Ergänzend oder alternativ hierzu kann die Versteifungsrippe ebenfalls mit dem Rand der Rohröffnung verbunden sein. Die Versteifung kann hierbei durch eine lokale Verdickung des weichelastischen Materials der Membran erzeugt werden. Alternativ oder ergänzend hierzu kann die Versteifungsrippe ebenfalls aus dem oben beschriebenen harten Kunststoffmaterial bestehen, welches an die Membran angebracht wird.

### KURZE BESCHREIBUNG DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer Installationsdose gemäss der Erfindung in einer perspektivischen Ansicht von unten;
- Fig. 2: die erste Variante der Installationsdose gemäss Figur 1 in einer perspektivischen Ansicht von oben;
- Fig. 3: die erste Variante der Installationsdose gemäss Figur 1 in einer Ansicht von unten;
- Fig. 4: die erste Variante der Installationsdose in einer geschnittenen Ansicht (F-F) gemäss Figur 3;
- Fig. 5: ein Detailausschnitt der ersten Variante der Installationsdose gemäss Figur 4;
- Fig. 6: eine zweite Variante der Installationsdose gemäss der Erfindung in einer perspektivischen Ansicht von unten;
- Fig. 7: ein Detailausschnitt D der zweiten Variante der Installationsdose gemäss Figur 6.

### BESCHREIBUNG DER AUSFÜHRUNGSFORMEN

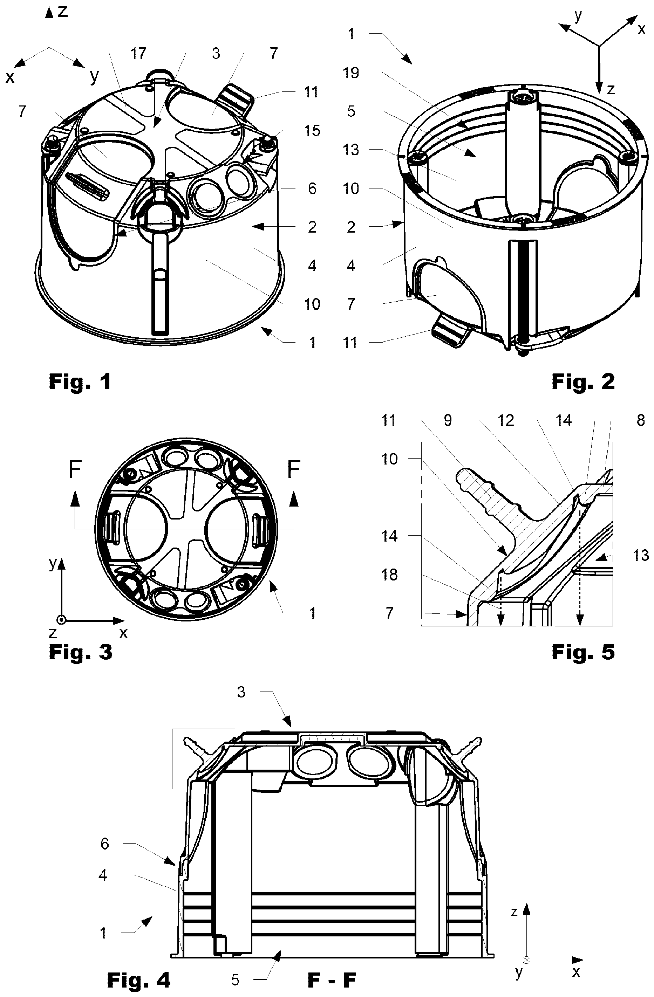

**Figur 1** bis **Figur 5** zeigen eine erste Variante einer erfindungsgemässen Installationsdose 1 für elektrotechnische Zwecke. Die Installationsdose 1 umfasst einen Dosenkörper 2 mit einem Dosenboden 3 und einer daran anschliessenden Dosenwand 4, welche einen Installationsraum 19 umgeben, welcher über eine dem Dosenboden 3 gegenüberliegende Installationsöffnung 5 zugänglich ist. Der Dosenkörper 2 weist in der gezeigten Variante weiter einen Übergangsbereich 15 auf, welcher zwischen dem Dosenboden 3 und der Dosenwand 4 ausgebildet ist.

Der Dosenkörper 2 weist zwei einander diametral gegenüber angeordnete Rohröffnungen 6 zum Einführen von Elektrorohren in den Installationsraum 19 auf. Diese Rohröffnungen 6 erstrecken sich in der gezeigten Variante vom Dosenboden 3 über den Übergangsbereich 15 in die Dosenwand 4 (andere Ausgestaltungen sind möglich). Die Rohröffnungen 6 sind von einer elastischen Membran 7 abgedeckt. Die Membranen 7 können zur einfacheren Herstellbarkeit wie gezeigt über Stege 17 aus dem gleichen elastischen Material miteinander verbunden sein, was eine gemeinsame Fertigung mittels Spritzgiessen ermöglicht. Die Stege 17 verlaufen oberflächlich über die Dosenaussenseite 10.

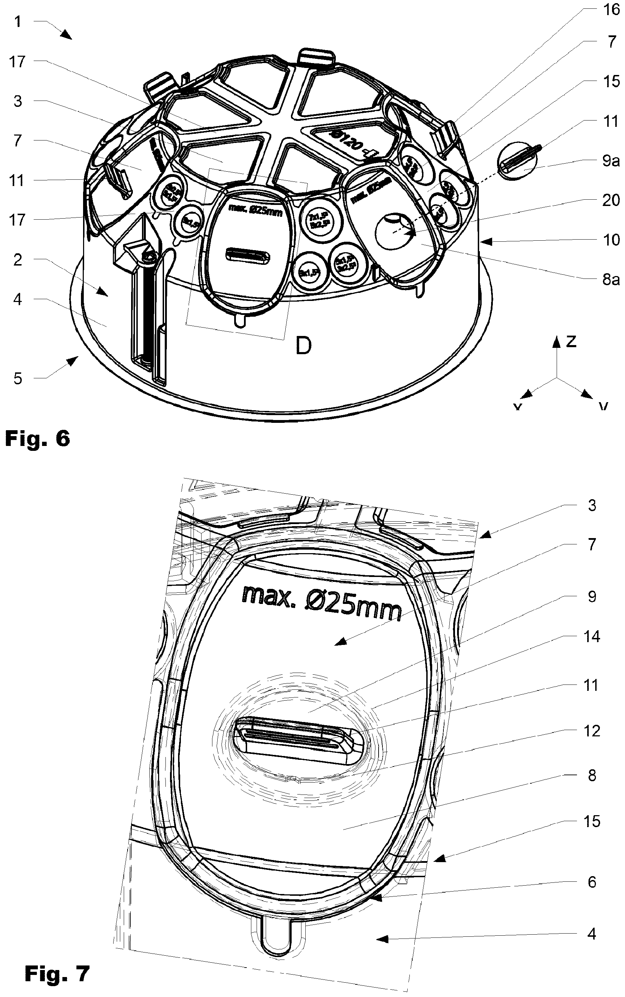

Wie insbesondere in den **Figuren 5** und **7** zu erkennen ist, weisen die Membranen 7 eine äussere und eine innere Zone 8, 9 auf. Hierbei umgibt die äussere Zone 8 die innere Zone 9. Zwischen der äusseren und der inneren Zone 8, 9 befindet sich weitergehend eine die innere Zone 9 umgebende umlaufende Dünnstelle 12. Aus der Detailansicht in **Figur 5** ist ersichtlich, dass die Dünnstelle 12 auf einer Innenseite 13 des Dosenkörpers 2 angebracht ist. Die Dünnstelle ist als eine Vertiefung in einer U-Form ausgestaltet, jedoch sind ebenfalls andere Formen denkbar. Weiterhin ist erkennbar, dass die äussere Zone 8 eine um die innere Zone 9 umlaufende Wulst 14 umfasst, welche entlang der Dünnstelle 12 verläuft. Die umlaufende Wulst 14 der äusseren Zone 8 ist ebenfalls an der Innenseite 13 der Membran, respektive des Dosenkörpers 2, angeordnet. Hierbei weist die Dünnstelle 12 zur besseren Entformbarkeit nach der Herstellung durch Spritzguss nach Möglichkeit keinen Hinterschnitt in Entformungsrichtung 18 (Richtung zur Installationsöffnung 5) auf. Das heisst, dass sich die Dünnstelle 12 mit Vorteil in die Entformungsrichtung 18 erstreckt. Auf der Dosenaussenseite 10 ist an die innere Zone 9 weiter eine Abreisslasche 11 angeformt. Die Abreisslasche 11 hat einen rechteckigen Querschnitt, erstreckt sich von der Dosenaussenseite 10 weg und ist zudem mit Vorteil mit einem Winkel zur Entformungsrichtung angeordnet. Die Ausgestaltung ist derart gewählt, dass die Abreisslasche 11 gut zwischen zwei Finger eines Benutzers greifbar ist. Weiterhin ist ein Greiforgan 16 in der Form von Lamellen an der Oberfläche der Abreisslasche 11 angebracht um eine bessere Griffigkeit zu erzeugen.

**Figur 6** zeigt eine zweite Variante einer erfindungsgemässen Installationsdose 1 in einer perspektivischen Ansicht von unten. Die abgebildete Installationsdose 1 unterscheidet sich in der Form des Dosenkörpers 2 sowie in der Anordnung der Rohröffnungen 6 über den Dosenkörper 2 von der zuvor beschriebenen ersten Variante der Installationsdose 1. Die breitere Form des Dosenkörpers 2 der zweiten Variante ermöglicht eine grössere Anzahl von Rohröffnungen 6, welche sich über den Umfang der Installationsdose 1 verteilen. Im gezeigten Fall haben die Rohröffnungen hierbei unterschiedliche Grössen und sind im Bereich des Übergangsbereiches zwischen Dosenboden 3 und Dosenwand verteilt. Die grösseren Rohröffnungen 6 sind hierbei mit einer Membran 7 mit einer äusseren und einer inneren Zone 8, 9 bespannt, wie zuvor beschrieben. Alle Membranen 7 sind weiterhin ebenfalls durch mindestens einen Steg 17 miteinander verbunden, identisch zu der ersten Variante.

Eine herausgetrennte innere Zone 9a mit einer darauf angeordneten Abreisslasche 11 ist dargestellt, welche entlang der umlaufenden Dünnstelle 12 aus der äusseren Zone 8a der Membran 7 herausgetrennt wurde. Auf der Innenseite 13 der Installationsdose 1 wird die derart gebildete Einführungsöffnung 20 in der äusseren Zone 8 durch eine umlaufende Wulst 14 umrandet und verstärkt, wie oben beschrieben (hier nicht sichtbar). **Figur 7** zeigt ein Detail der innen und der äusseren Zone 8, 9 gemäss **Figur 6****.** Durch die Darstellung der verdeckten Linien ist hier ersichtlich, dass die Dünnstelle 12 und die Wulst 14 an der Innenseite 13 der Membran 7 (innere Zone 8) angeordnet sind, während die Abreisslasche 11 an der Aussenseite 10 positioniert ist.

**LISTE DER BEZUGSZEICHEN**

| | | | |
|---|---|---|---|
| 1 | Installationsdose | 12 | Dünnstelle |
| 2 | Dosenkörper | 13 | Innenseite (Dose) |
| 3 | Dosenboden | 14 | Wulst |
| 4 | Dosenwand | 15 | Übergangsbereich |
| 5 | Installationsöffnung | 16 | Greiforgan |
| 6 | Rohröffnung | 17 | Stege |
| 7 | Membran | 18 | Entformungsrichtung |
| 8 | Äussere Zone | 19 | Installationsraum |
| 9 | Innere Zone | 20 | Einführungsöffnung |
| 10 | Aussenseite (Dose) | | |
| 11 | Abreisslasche | | |

## Patentansprüche

1. Installationsdose (1) für elektrotechnische Zwecke mit einem Dosenkörper (2) umfassend einen Dosenboden (3) und eine daran anschliessende Dosenwand (4), sowie eine dem Dosenboden (3) gegenüberliegende Installationsöffnung (5), wobei
a. der Dosenkörper (2) mindestens eine Rohröffnung (6) zum Einführen eines Elektrorohres umfasst, welche durch eine weichelastische Membran (7) verschlossen ist,
b. die elastische Membran (7) zumindest eine äussere Zone (8) und eine von der äusseren Zone (8) umgebene, heraustrennbare innere Zone (9) umfasst,
c. zumindest bereichsweise eine entlang eines äusseren Randes der inneren Zone (9), zwischen der inneren und der äusseren Zone (9, 8), umlaufende Dünnstelle (12) zum Heraustrennen der inneren Zone (9) vorgesehen ist,
**dadurch gekennzeichnet, dass**
d. die äussere Zone (8) eine um die innere Zone (9) umlaufende Wulst (14) umfasst, welche in Form einer lokalen Verdickung der Membran auf einer Membranaussenseite und/oder einer Membraninnenseite vorliegt.

2. Installationsdose (1) gemäss Anspruch 1, **dadurch gekennzeichnet, dass** ein an die Dünnstelle (12) angrenzender Bereich so ausgestaltet ist, dass beim Heraustrennen an einer oder mehreren Stellen eine Konzentration der anliegenden Kräfte auftritt, welche das Anreissen der Membran (7) unterstützt.

3. Installationsdose (1) gemäss Anspruch 2, **dadurch gekennzeichnet, dass** der an die Dünnstelle (12) angrenzender Bereich ein eine oder mehrere zusätzliche Kerben oder Elemente aufweist, welche zur Stresskonzentration dienen und das Anreissen der Membran (7) unterstützen.

4. Installationsdose (1) gemäss einem der vorangehenden Ansprüche, **dadurch gekennzeichnet, dass** die Wulst (14) direkt entlang der Dünnstelle (12) oder in einem gewissen Abstand dazu angeordnet ist, um eine Dichtlippe auszubilden, welche gegenüber dem Elektrorohr abdichtet.

5. Installationsdose (1) gemäss einem der vorangehenden Ansprüche, **dadurch gekennzeichnet, dass** die innere Zone (8) der Membran (7) zumindest eine Versteifungsrippe aufweist, welche an die Membran (7) angeformt ist und aus dem gleichen Material besteht.

6. Installationsdose (1) gemäss Anspruch 5, **dadurch gekennzeichnet, dass** eine lokale Verdickung des weichelastischen Materials eine Versteifung der Membran (7) erzeugt.

7. Installationsdose (1) gemäss einem der vorangehenden Ansprüche 5 oder 6, **dadurch gekennzeichnet, dass** die Versteifungsrippe an der Membran (7) innen und/oder aussen angeordnet ist.

8. Installationsdose (1) einem der vorangehenden Ansprüche 5 bis 7, **dadurch gekennzeichnet, dass** die Versteifungsrippe mit der Wulst (14) gekoppelt ist.

9. Installationsdose (1) gemäss einem der vorangehenden Ansprüche, **dadurch gekennzeichnet, dass** der Dosenkörper (2) einen abgerundeten und/oder abgeflachten Übergangsbereich (15) aufweist, welcher zwischen dem Dosenboden (3) und der Dosenwand (4) angeordnet ist.

10. Installationsdose (1) gemäss Anspruch 9, **dadurch gekennzeichnet, dass** die innere Zone (9) der Membran (7) in dem Übergangsbereich (15) angeordnet ist.

11. Installationsdose (1) gemäss einem der vorangehenden Ansprüche, **dadurch gekennzeichnet, dass** die Membran (7) im Bereich der Dünnstelle (12) eine konstante und/oder eine variable Dicke in Umfangsrichtung aufweist.

12. Installationsdose (1) gemäss Anspruch 11, **dadurch gekennzeichnet, dass** eine tiefste Stelle der umlaufenden Dünnstelle (12) gleichzeitig als Einreissstelle vorgesehen ist, an der sich die innere Zone (9) als erstes von der äusseren Zone (8) löst.

13. Installationsdose (1) gemäss einem der vorangehenden Ansprüche, **dadurch gekennzeichnet, dass** die elastische Membran (7) auf der Dosenaussenseite (10) eine nach aussen vorstehende Abreisslasche (11) aufweist und die äussere Zone (8) und die innere Zone (9) durch eine Dünnstelle (12) getrennt sind.

14. Installationsdose (1) gemäss einem der vorangehenden Ansprüche, **dadurch gekennzeichnet, dass** die äussere Zone (8) unterschiedliche Materialdicken aufweist.

## Claims

1. Installation box (1) for electrotechnical purposes, having a box body (2) including a box base (3) and a box wall (4) adjacent to said box base, as well as an installation opening (5) arranged opposite the box base (3), wherein
a. the box body (2) includes at least one conduit opening (6) for inserting an electrical conduit, which conduit opening is closed by an elastic membrane (7), wherein
b. the elastic membrane (7) includes at least one outer zone (8) and a detachable inner zone (9) which is surrounded by the outer zone (8),
c. at least in some regions, a thin portion (12) is provided along an outer edge of the inner zone (9), between the inner and outer zones (9, 8), for separating the inner zone (9)
**characterized in that**
d. the outer zone (8) includes a bead (14) surrounding the inner zone (9), which is in the form of a local thickening of the membrane on an outer side of the membrane and/or an inner side of the membrane.

2. Installation box (1) according to claim 1, **characterized in that** a region adjacent to the thin portion (12) is designed such that, when tearing out at one or more locations, a concentration of the bearing forces occurs which supports the tearing of the membrane (7).

3. Installation box (1) according to claim 2, **characterized in that** the area adjacent to the thin portion (12) has one or more additional notches or elements which are used for stress concentration and support the tearing of the membrane (7).

4. Installation box (1) according to one of the preceding claims, **characterized in that** the bead (14) is arranged directly along the thin portion (12) or at a certain distance therefrom to form a sealing lip which seals against the electrical tube.

5. Installation box (1) according to one of the preceding claims, **characterized in that** the inner zone (8) of the membrane (7) has at least one reinforcing rib which is moulded onto the membrane (7) and is made of the same material.

6. Installation box (1) according to claim 5, **characterized in that** a local thickening of the soft elastic material produces a stiffening of the membrane (7).

7. Installation box (1) according to one of the preceding claims 5 or 6, **characterized in that** the reinforcing rib is arranged on the inside and/or outside of the membrane (7).

8. Installation box (1) according to one of the preceding claims 5 to 7, **characterized in that** the reinforcing rib is coupled to the bead (14).

9. Installation box (1) according to one of the preceding claims, **characterized in that the** box body (2) has a rounded and/or flattened transition region (15) arranged between the box base (3) and the box wall (4).

10. Installation box (1) according to claim 9, **characterized in that** the inner zone (9) of the membrane (7) is arranged in the transition region (15).

11. Installation box (1) according to one of the preceding claims, **characterized in that** the membrane (7) has a constant and/or variable thickness in the circumferential direction in the region of the thin portion (12).

12. Installation box (1) according to claim 11, **characterized in that** a lowest point of the circumferential thin portion (12) is simultaneously provided as a tear point at which the inner zone (9) first separates from the outer zone (8).

13. Installation box (1) according to one of the preceding claims, **characterized in that** the elastic membrane (7) has a tear-off tab (11) projecting outwards on the outside of the box (10) and the outer zone (8) and the inner zone (9) are separated by a thin portion (12)

14. Installation box (1) according to one of the preceding claims, **characterized in that** the outer zone (8) has different material thicknesses.

## Revendications

1. Boîte d'installation (1) à usage électrotechnique comprenant un corps de boîte (2) pourvu d'un fond de boîte (3) et d'une paroi de boîte (4) se raccordant à celui-ci, ainsi que d'une ouverture d'installation (5) en regard du fond de boîte (3),
a. le corps de boîte (2) comprenant au moins une ouverture de tube (6) qui est destinée à l'insertion d'un tube électrique et est fermée par une membrane élastique (7),
b. la membrane élastique (7) comprenant au moins une zone extérieure (8) et une zone intérieure séparable (9) qui est entourée par la zone extérieure (8),
c. au moins par zones, une mince portion circonférentielle (12) est prévue le long d'un bord extérieur de la zone intérieure (9), entre la zone intérieure et la zone extérieure (9, 8), pour séparer la zone intérieure (9)
**caractérisée en ce que**
d. la zone extérieure (8) comprend un bourrelet (14) qui s'étend autour de la zone intérieure (9), qui se présente sous la forme d'un épaississement local de la membrane sur un côté extérieur de la membrane et/ou un côté intérieur de la membrane.

2. Boîtier d'installation (1) selon la revendication 1, **caractérisé en ce qu'**une zone adjacente à la mince portion (12) est conçue de telle sorte que, lors du retrait à un ou plusieurs portions, il se produit une concentration des forces appliquées qui favorise le déchirement de la membrane (7).

3. Boîtier d'installation (1) selon la revendication 2, **caractérisé en ce que** la zone adjacente à la mince portion (12) présente une ou plusieurs encoches ou éléments supplémentaires qui servent à concentrer les contraintes et favorisent la déchirure de la membrane (7).

4. Boîtier d'installation (1) selon l'une des revendications précédentes, **caractérisé en ce que** le bourrelet (14) est arrangé directement le long de la mince portion (12) ou à une certaine distance de celle-ci afin de former une lèvre d'étanchéité qui assure l'étanchéité par rapport au tube électrique.

5. Boîtier d'installation (1) selon l'une des revendications précédentes, **caractérisé en ce que** la zone intérieure (8) de la membrane (7) comporte au moins une nervure de rigidification qui est formée sur la membrane (7) et est constituée du même matériau.

6. Boîtier d'installation (1) selon la revendication 5, **caractérisé en ce qu'**un épaississement local du matériau souple et élastique produit un raidissement de la membrane (7).

7. Boîtier d'installation (1) selon l'une des revendications 5 ou 6 précédentes, **caractérisé en ce que** la nervure de rigidification est disposée à l'intérieur et/ou à l'extérieur de la membrane (7).

8. Boîtier d'installation (1) selon l'une des revendications 5 à 7 précédentes, **caractérisé en ce que** la nervure de rigidification est couplée au bourrelet (14).

9. Boîtier d'installation (1) selon l'une des revendications précédentes, **caractérisé en ce que** le corps de boîte (2) présente une zone de transition (15) arrondie et/ou aplatie, qui est disposée entre le fond de boîte (3) et la paroi de boîte (4).

10. Boîtier d'installation (1) selon la revendication 9, **caractérisé en ce que** la zone intérieure (9) de la membrane (7) est disposée dans la zone de transition (15).

11. Boîtier d'installation (1) selon l'une des revendications précédentes, **caractérisé en ce que** la membrane (7) présente, dans la zone de la mince portion (12), une épaisseur constante et/ou variable dans le sens circonférentiel.

12. Boîtier d'installation (1) selon la revendication 11, **caractérisé en ce qu'**un point le plus bas de la mince portion circonférentielle (12) est prévu en même temps comme un portion déchirable, à laquelle la zone intérieure (9) se détache en premier de la zone extérieure (8).

13. Boîtier d'installation (1) selon l'une des revendications précédentes, **caractérisé en ce que** la membrane élastique (7) présente, sur le côté extérieur (10) du boîtier, une languette déchirable (11) faisant saillie vers l'extérieur, et la zone extérieure (8) et la zone intérieure (9) sont séparées par une mince portion (12).

14. Boîtier d'installation (1) selon l'une des revendications précédentes, **caractérisé en ce que** la zone extérieure (8) présente différentes épaisseurs de matériau.
